# EUROPEAN PATENT SPECIFICATION

(11) **EP 3 568 786 B1**
(45) Date of publication and mention of the grant of the patent: **15.07.2020**
(21) Application number: 18719159.8
(22) Date of filing: 20.04.2018
(51) Int. Cl.: G06F 21/10, H04L 29/06, H04W 12/08, H04W 84/18, H04L 29/08, G06F 21/62, G06F 21/64

(54) **METHOD FOR CARRYING OUT DATA TRANSFER PROCESSES IN INDUSTRIAL INSTALLATIONS**
VERFAHREN ZUR DURCHFÜHRUNG VON DATENÜBERTRAGUNG PROZESSEN IN INDUSTRIEANLAGEN
PROCÉDÉ D'EXÉCUTION DE PROCESSUS DE TRANSFERT DE DONNÉES DANS DES INSTALLATIONS INDUSTRIELLES

(30) Priority: 21.04.2017 DE 102017108555
(43) Date of publication of application: 20.11.2019
(73) Proprietor: Ondeso GmbH, 93055 Regensburg (DE)
(72) Inventor: METKA, Rolf-Dieter, 63486 Bruchköbel (DE); STEMPLINGER, Martin, 93051 Regensburg (DE)
(74) Representative: Rausch Wanischeck-Bergmann Brinkmann
(86) International application number: PCT/EP2018/060163
(87) International publication number: WO 2018/193080

(56) References cited:
- US-A1- 2005 229 004
- US-A1- 2015 281 233
- US-A1- 2016 112 406

## Description

The invention relates to a method for carrying out data transfer processes in industrial installations. The invention also discloses a system for implementing the method.

Manufacturing or infrastructure installations, related equipment and dedicated components, especially computers with software applications, in the following summarized under the term industrial installations, would typically be configured by a respective operator with offerings from more than one equipment vendor.

Such installations are dedicated to, for example, manufacturing mechanical parts, processing pre-fabricated materials, production of chemicals, assembly of passenger cars or commercial vehicles and related components or units, maintenance of aircraft, diagnosis of medical samples, bottling of beverages, packaging of food, traffic guidance, water supply, as well as waste water disposal and purification, or transmission and distribution of electrical energy.

An operator would typically operate multiple industrial installations with identical, similar or different configurations, moreover, such installations may be in different locations. One vendor would typically supply components not only to one operator but to multiple installation operators, such that components from one vendor are installed in multiple industrial installations of different operators which is the respective vendor's installed base. In one observed business model the equipment vendor is also assigned by the operator to operate the industrial installation in parts or in total.

In operation and along the life cycle of an industrial installation both operators and suppliers repeatedly need to transfer data (i.e. computer files) into the installation, within the installation or to the outside of the installation, e.g. to determine the configuration of the installation (i.e. configuration state) or the operational state of an installation, or to change the configuration. Such states comprise initially installation engineering, especially by the vendor, set-up, implementing components or re-arranging, maintenance and/or eventually dismantling the installation. Respective files contain e.g. configuration data, program code for controls, for man-machine interfaces and for management systems, data concerning maintenance instructions and/or related executed tasks and/or related results, as well as data concerning exceptional operation events.

It is state of the art and common practice in transferring files with an industrial installation to use data storage devices, e.g. mobile data storage devices such as USB sticks with files stored on respective device. Such data storage devices would be handled by personnel of an installation operator and/or by personnel of a component vendor. In each case it takes suitable coordination of personnel, especially as to authorization and related data security. File transfer via network systems is also known.

With respective file transfer related to hardware and software systems in commercial administration products summarized under the generic term device control would be deployed, especially for protection against malware, data loss and data breach. Device control has inherited limitations for operators of industrial installations and respective equipment vendors, resulting into disadvantages as to data security, process reliability and process economies, because of which device control is not satisfactory adoptable in industrial installations. This applies even in cases where a remote storage device is used via a network. Especially, disadvantages as follows are to be considered:
According to a known implementation a file is only identified by the device it is stored on, thus a file with the same data content on another device is inherently treated as a different file. The storage device would typically be identified by the device ID. This system may cause problems in cases where files with the same data content are identified as different files and/or different files identified as the same because of identical storage device IDs.

In general, in approving a file the source of the file is not specified or authorized, and also the target system is not specified. In case the target system requires such a designation post-processing is necessary after file transfer. Moreover, from the perspective of an installation operator, files to be implemented typically address not only sections of the installation and the related industrial process, e.g. components not from just one vendor, such as of robots and related control or management systems, such that file transfer must be feasible vendor-independent across the entire industrial installation. On the other hand, from the perspective of an equipment vendor file transfer must be feasible operator-independent addressing the vendors installed base.

Against this background methods and systems are needed for authorized file transfer in industrial installations which overcome such disadvantages and map the relations between industrial equipment vendors, installation operators and locations.

It is state of the art and common practice that components offered by certain vendors are equipped with proprietory security systems for data transfer. This, in case of installations with components supplied by different vendors leads to substantial problems for installation operators or implementers of industrial information technology (IT). Uniform standards for industrial deployment are not available. Standards from other fields are not suitable because in such other fields crucial aspects of industrial installations and respective components are not taken into account.

Proceeding from the state of the art the present invention is based on the **purpose** to provide a method for carrying out data transfer processes in industrial installations, which protects against unauthorized manipulation, improves process reliability, and reduces significantly technical and organizational effort.

As a technical **solution** for this purpose a method is proposed with the characteristics of claim 1. Additional advantages and characteristics follow from succeeding claims.

According to the invention an authorization file is generated, which especially comprises information as to equipment vendor, operator and location of respective components or installation, or which is based on such information. Such a file would be combined with data to be transferred and provided accordingly.

According to the invention a first unit is designated to generate, store, administer and/or distribute authorizations or authorization files respectively. Authorization files may be formed as a certificate. This may also be based on a common certificate standard, e.g. the X.509 standard. In this case, respective standard and non-standard attributes would be utilized to process and transfer information which specify industrial installations. The authorization files are formed such that relations between equipment vendor and installation operators, locations of already installed industrial installations or industrial installations to be installed are taken into account, together with computers and software applications. Authorizations for transferring data, such as rendering and/or receiving files would result therefrom.

According to the invention respective certificates ensure that for a data transfer process arrangement of data to be transferred is ensured, as well as data transfer itself, and finally data import to designated components. The certificate ensures that only authorized components may withdraw data and that data may only be supplied to authorized components. The certificate also ensures that only authorized data transfer media and routes may be used.

According to a proposal of the invention in generating the certificate, actual and targeted information concerning the industrial installation is taken into account. In a sense, the certificate comprises information related to respective assignments, insofar the information maps relations between equipment vendors and installation operators.

Preferably, the certificate is generated by implementing a standard, especially according to the X.509 standard. In this case, X.509 conforming data space for so called standard and non-standard attributes would be utilized.

Favorably, the certificate is added to data to be transferred. Insofar, data to be transferred carries with them the authorization for receiving components, as well as information about data storage devices, if requested.

Either, through suitable controls, data receiving components are prepared such that they interpret the certificate and accept data accordingly, or an additional unit or component is introduced into the system which controls the data transfer process. This may also be a single component of a computer network system which may also be software-implemented or feature a single hardware component.

Favorably, a data storage device to be used will be blocked as to storing any further data. This is especially favored if mobile data storage devices like USB stick or similar are used. Blocking may be achieved by alternate measures. However, the data storage device will only store data to be transferred together with certificate.

A further unit, device or software, would be deployed according to the invention to complement data to be transferred by the authorizations in accordance with generated or provided certificates and/or concerning data manipulation and transfer processes. They may also get encoded in accordance with the authorizations.

A further unit, additional device or software, has the purpose to complement computers with software applications. This unit is formed to transfer data, i.e. to receive and/or to render, if the authorization can be validated. This is virtually the unit which initializes the installation components. The components can thus validate themselves if they are intended to receive the data and if the data offered is authorized.

Alternate additional units are designated for the case of transfer by mobile data storage devices. One unit is formed to lay out the data directory such that the storage device does not have capacity for storing any further data. For example, with a USB stick, after having received data to be transferred, data get complemented with further data, e.g. without information, such that no further data from a third side can be stored on the device. The device would just be exhausted.

A further unit for validating and labeling data stored on mobile storage devices is formed such that files get validated as to authorization and security and labeled based on the validation result and accordingly approved for or excluded from transfer.

Finally, one unit is designated for the case of partial transfer of data with mobile devices, formed such that data to be transferred is complemented with data concerning manipulations and device validation. If appropriate, encoding may be abandoned.

A further unit has the purpose to network all units mentioned, or only a selection thereof, together with related computers and software applications within the industrial installation.

Each of the units may be formed as separate computer, independent device or software application, integrated into the respective system. Dependent on installation size and complexity, the system may be implemented within a single computer network or within multiple networks to be linked.

The invention provides favorably a method, which especially reduces substantially organizational and technical effort and moreover improves process reliability.

If required, data, data packets, or computer files, with or without certificate, may get encoded.

The invention provides a method which improves substantially process reliability, as well as a system for implementing the method.

Further characteristics and advantages of the invention are revealed by the subsequent description and reference to the figures, which exhibit:
- Fig. 1: in a purely schematic illustration an industrial installation referencing a single application;
- Fig. 2: in a purely schematic illustration an industrial installation referencing a multiple application and

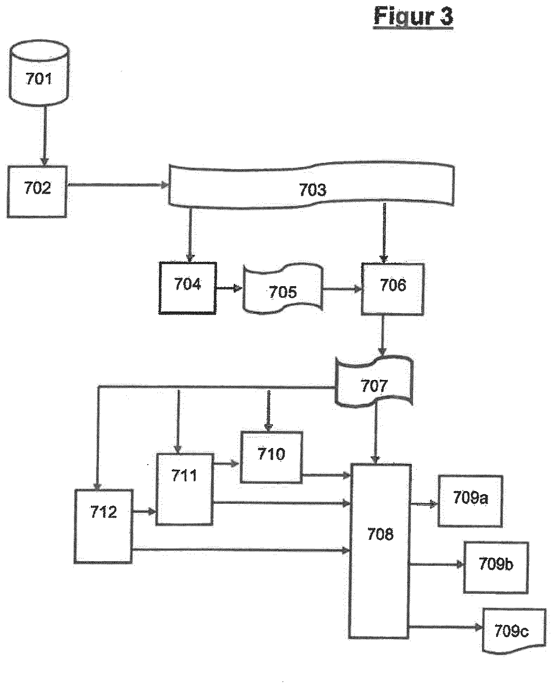

- Fig. 3: a schematic illustration of a data transfer process and system according to the invention.

The example described by reference to the figures is for illustration purposes only. It in no way limiting and has only the purpose of explaining a potential form of implementation. Especially, method or system according to the invention is not limited to any specifically formed industrial installation and/or to any specifically formed component. Rather, method or system according to the invention may be deployed independently of specific industries or operator installations.

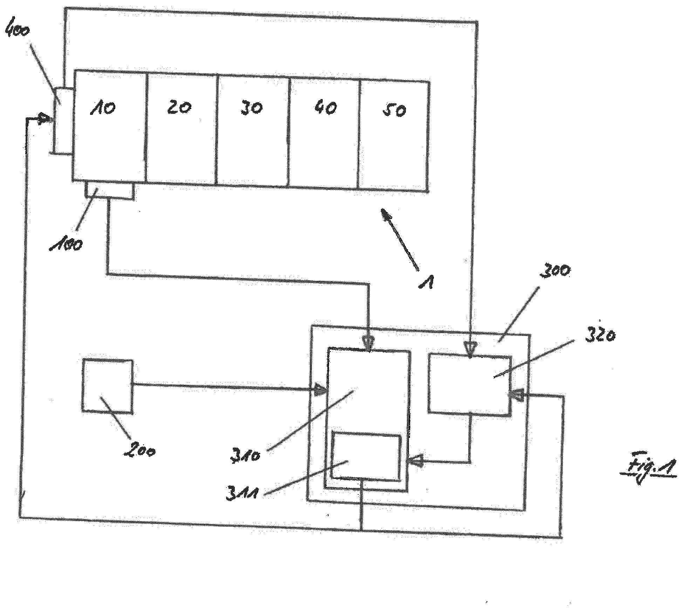

Fig. 1 exhibits in a schematic illustration an industrial installation 1, which may be an installation for bottling beverages, an installation for metal sheet processing with pressing or laser cutting, or an industrial installation management and control system

Industrial installation 1 consists of multiple components, with the exemplified case showing five components 10, 20, 30, 40 und 50. Such a component is a module of industrial installation 1, which in combination with the other components facilitates the operational purpose of industrial installation 1. Such components or modules may be computer units, storage modules, machine sub-systems, measurement and/or sensor equipment, control components, conveyor and/or other component of an industrial installation.

In maintaining the operational purpose of the industrial installation 1 it is required from time to time to transfer files to one or more components, within components or from components. For example, this may be required if components need maintenance or substitution with another component, which may involve adaptation and/or integration of software as to the components, if an update of software has to be implemented or the lifecycle of the industrial installation has to be adapted to future states.

In order to maintain process reliability for the overall industrial installation while implementing such files, according to the present invention, a suitability evaluation of data contained in such files is performed based on past and/or targeted states of the component and/or the industrial installation, especially data specifying states along the lifecycle of the component and/or the industrial installation.

This is why an evaluation unit 300 is provided, which comprises a comparison and selection device 310 and a data storage device 320. In turn, the comparison and evaluation device 310 comprises a device for generating order files.

The data storage device 320 holds an order and result data bases, which contains order and result data concerning past and/or targeted states of the components 10, 20, 30, 40, 50 and/or the industrial installation 1. This data storage device communicates with the comparison and selection device 310.

The system according to the present invention also provides two data collecting units, a first data collection unit 100 and a second data collection unit 200. The first data collecting unit 100 is provided to collect data concerning the actual state of a component and/or installation 1. In the illustrated implementation example, the first collecting unit is a module of a systems management computer not exhibited in the illustrations, which is related to component 10. In this respect, the management computer may be substituted by another computing unit, provided to take care of all components 10 to 50 likewise. Anyway, unit 100 collects data concerning the actual state of component 10. Respective data concerning the actual state of component 10 are supplied to the comparison and selection unit 310.

The second data collection unit 200 is designed for providing order data, which means data concerning a targeted state. The order data are also provided by the comparison and selection device 310.

The comparison and selection unit 310 is designed, on the one hand, for comparing data concerning the actual state with the order data, and on the other hand, for evaluating data concerning past and/or targeted state and for selecting suitable order data. Thus, on the one hand, differences between the actual state and the targeted state are established, and on the other hand, it is evaluated if order data required for the targeted state is suitable for transfer to the industrial installation 1 or one or more of the respective components. If so, suitable order data are selected and compiled to an order file by the device for generating an order file. This order file is then transferred to the respective component 10, 20, 30, 40, 50 and/or the industrial installation 1.

Moreover, a device for result files 400 is provided. This device is designed for compiling data concerning executed orders to a result file. That data is stored as well as the order data in the data storage device 320, such that is available for future evaluation as to suitability.

The individual devices according to the present invention explained above may be combined in one system or be distributed to multiple systems in different locations, depending on required application. Likewise, a system according to the present invention or parts thereof, may be implemented in the industrial installation 1 or its components, or implemented in a remote location. Therefore, implementation according to the present invention is not limited to a specific combination with the industrial installation. Rather, it is critical that data are combined in the above described manner, after comparison and evaluation for suitability, and compiled in an order file, with the evaluation taking into account past, present and targeted states along the lifecycle of a component 10, 20, 30, 40, 50 and/or the industrial installation, especially as to the respective installed state and/or results of prior orders, such as concerning maintenance with program code for software updates.

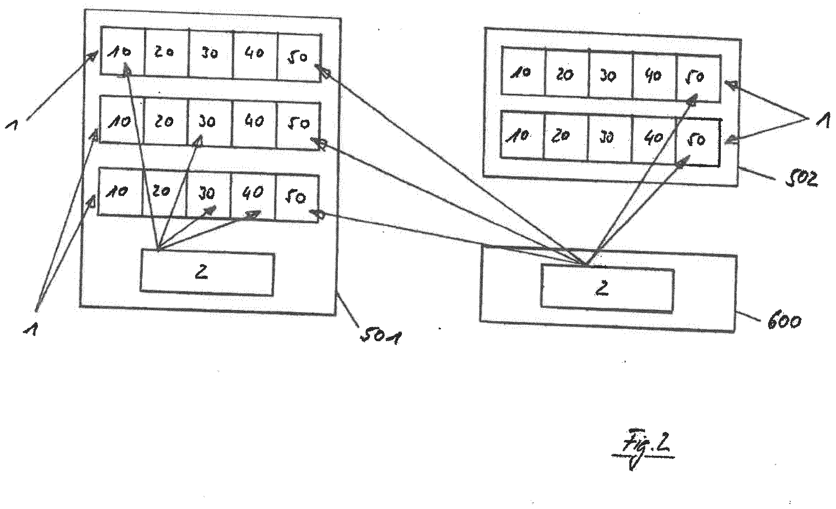

Fig. 2 illustrates schematically a configuration which is designed vendor-independent on the one hand, and operator-independent on the other hand.

In the implementation example illustrated one operator 501 operates three industrial installations 1. A second operator 502 operates two industrial installations 1.

With the one operator 501 a system 2 is implemented according to the present invention with Fig. 2 illustrating diagrammatically that system 2 is designed for transferring data to component 10 of the first industrial installation 1, to component 30 of the second industrial installation 1 and to components 30 and 40 of the third industrial installation 1. Data transfer is therefore performed independently of the respective component vendor and is therefore operator-focused.

The respective components 50 of industrial installation 1 of the first operator 501 as well as of the second operator 501 are supplied by vendor 600. Vendor 600 also uses system 2 according to the present invention, in which case it has the purpose of transferring files to respective components 50 of individual industrial installations 1 independently of operator 501 and 501 respectively. As far as components 50 are concerned file transfer is performed operator-independent and is therefore vendor-focused.

According to the invention, all necessary data concerning the relations between equipment vendors and operators of industrial installations, locations of already installed industrial installations or industrial installations to be installed, related computers and software applications, and if applicable further characteristics are stored in data base 701. This may comprise a single file or multiple files.

Assignment-oriented a certificate 703 is generated by generator 702. Subsequently, by a separate or integrated unit 704, all necessary data to be transferred 705 are assembled. A likewise separated or integrated unit 706 the data to be transferred 705 are joined with certificate 703. This results into the data set to be transferred 707.

The data set will be transferred according to components 709a, 709b, 709c and further.

For this purpose, a dedicated unit 708 is contained in the illustrated implementation example. This may be a separate unit, or a component related to the controls of data transfer processes. In case of an integrated computer network it may also be a module of the industrial installation itself or implemented as application on the various components. This unit 708, whether component-integrated or stand-alone, is provided to carry out transfers governed by the certificate, i.e. such that the data receiving components are in place.

A respective device may be designated for generating data 705 anyway, i.e. determine based on the certificate which data from which components are to be considered.

In case of complete integration, the individual module or component 708 is dispensable and becomes a part of component 709.

The illustrated implementation example is provided with optional additional components. Components 710, 711 or 712 each may be deployed on their own, independent from other components or in any sequence with other components. The illustrated sequence is arbitrary and only an example.

For instance, a component 710 may be provided such that a data storage device gets blocked as to storing any other data, in case data to be transferred is stored on the device, ordinarily complemented by a certificate 703. The is especially advantageous if the data storage device is mobile.

Another component 711 is provided to validate data according to authorizations and data security, in order to label such data based on the validation result and either approve for transfer or exclude from transfer. This is also especially favorable if the data storage device is mobile.

Finally, a component 712 may be provided, formed to complement data to be transferred with data which concern validation of the storage device and manipulations. According to the invention such data would not be encoded.

All units involved may be formed from separate devices or be part of integrated network applications.

### List of reference signs

- 1: industrial installation
- 2: system
- 10: component
- 20: component
- 30: component
- 40: component
- 50: component
- 100: first data collection unit
- 200: second data collection unit
- 300: evaluation unit
- 310: comparison and selection device
- 311: device for generating order files
- 320: data storage device
- 400: device for generating result files
- 501: first installation operator
- 502: second installation operator
- 600: component vendor
- 701: data set
- 703: certificate source
- 703: certificate
- 704: data source
- 705: data to be transferred
- 706: unit for linking data and certificate
- 707: data set to be transferred
- 708: supply unit
- 709a: component
- 709b: component
- 709c: component
- 710: data storage device lock
- 711: data label
- 712: data addition

## Claims

1. Method for carrying out data transfer processes in industrial installations, **characterized by** an authorization file being generated based on installation-specific information concerning equipment vendors, operators and locations of respective installations, provided to accompany data to be transferred, whereby the authorization file being added to the data to be transferred.

2. Method according to claim 1, **characterized by** the authorization file being formed as a certificate.

3. Method according to any preceding claim, **characterized by** the certificate generated being based on a standard.

4. Method according to any preceding claim, **characterized by** the certificate being generated based on the X.509 standard.

5. Method according to any preceding claim, **characterized by** components of the industrial installation rendering or receiving data being controlled by an additional component validating authorizations for data transfer based on the authorization file.

6. Method according to any preceding claim, **characterized by** data to be transferred being stored on a data storage device is approved for usage in the installation.

7. Method according to any preceding claim, **characterized by** data to be transferred being stored on a data storage device is complemented with validation and/or manipulation information.

8. Method according to any preceding claim, **characterized by** a data storage device storing data to be transferred gets blocked as to storing any further data.

9. Method according to claim 8, **characterized by** the data storage device gets used up entirely beyond the data to be transferred.

10. Method according to any preceding claim, **characterized by** the data to be transferred get encoded.

## Patentansprüche

1. Verfahren zur Abwicklung von Daten-Übertragungsvorgängen in Industrieanlagen, **dadurch gekennzeichnet, dass** eine Berechtigungsdatei erzeugt wird, die auf anlagenspezifischen Informationen über Ausrüster, Betreiber und den Standort der jeweiligen Anlagen basiert, und zur Begleitung von zu übertragenden Daten bereitgestellt wird, wobei die zu übertragenden Daten um die Berechtigungsdatei ergänzt werden.

2. Verfahren nach Anspruch 1 **dadurch gekennzeichnet, dass** die Berechtigungsdatei als Zertifikat ausgebildet wird.

3. Verfahren nach einem der vorhergehenden Ansprüche, **dadurch gekennzeichnet, dass** das Zertifikat auf einem Standard basierend erstellt wird.

4. Verfahren nach einem der vorhergehenden Ansprüche, **dadurch gekennzeichnet, dass** das Zertifikat auf dem X.509-Standard basierend erstellt wird.

5. Verfahren nach einem der vorhergehenden Ansprüche, **dadurch gekennzeichnet, dass** Daten übergebende oder übernehmende Komponenten der Industrieanlage durch eine Berechtigung auf Basis der Berechtigungsdatei prüfende zusätzliche Komponente hinsichtlich der Datenübertragung gesteuert werden.

6. Verfahren nach einem der vorhergehenden Ansprüche, **dadurch gekennzeichnet, dass** zu übertragende Daten auf einem Datenträger für die Verwendung in der Anlage freigegeben werden.

7. Verfahren nach einem der vorhergehenden Ansprüche, **dadurch gekennzeichnet, dass** zu übertragende Daten auf einem Datenträger mit Informationen über seine Überprüfungen und/oder über Änderungsvorgänge versehen werden.

8. Verfahren nach einem der vorhergehenden Ansprüche, **dadurch gekennzeichnet, dass** ein zu übertragende Daten tragender Datenträger gegen die Aufnahme weiterer Daten gesperrt wird.

9. Verfahren nach Anspruch 8, **dadurch gekennzeichnet, dass** der Datenträger über die zu übertragenden Daten hinaus vollgeschrieben wird.

10. Verfahren nach einem der vorhergehenden Ansprüche, **dadurch gekennzeichnet, dass** die zu übertragenden Daten verschlüsselt werden.

## Revendications

1. Procédé d'exécution des processus de transfert de données dans des installations industrielles, **caractérisé par** l'étape de générer un fichier d'autorisation sur la base d'informations spécifiques de l'installation concernant des fournisseurs d'équipement, des opérateurs et des emplacements d'installations respectives, fournies pour accompagner les données à transférer, le fichier d'autorisation étant ajouté aux données à transférer.

2. Procédé selon la revendication 1, **caractérisé en ce que** le fichier d'autorisation est formé comme un certificat.

3. Procédé selon l'une quelconque des revendications précédentes, **caractérisé en ce que** le certificat généré est fondé sur un standard.

4. Procédé selon l'une quelconque des revendications précédentes, **caractérisé en ce que** le certificat généré est fondé sur le standard X.509.

5. Procédé selon l'une quelconque des revendications précédentes, **caractérisé en ce que** des composants de l'installation industrielle, qui sortent ou reçoivent des données, sont commandés par un composant supplémentaire, qui valide des autorisations pour le transfert de données sur la base du fichier d'autorisation.

6. Procédé selon l'une quelconque des revendications précédentes, **caractérisé en ce que** des données à transférer sont stockées dans un dispositif de stockage de données, qui est approuvé pour l'usage dans l'installation.

7. Procédé selon l'une quelconque des revendications précédentes, **caractérisé en ce que** des données à transférer, qui sont stockées dans un dispositif de stockage de données, sont complémentées par des informations de validation et/ou de manipulation.

8. Procédé selon l'une quelconque des revendications précédentes, **caractérisé en ce que** le dispositif de stockage de données, qui stocke des données à transférer, est bloqué pour un stockage d'autres données.

9. Procédé selon la revendication 8, **caractérisé en ce que** le dispositif de stockage de données est entièrement utilisé au-delà des données à transférer.

10. Procédé selon l'une quelconque des revendications précédentes, **caractérisé en ce que** les données à transférer sont encodées.
